# EUROPÄISCHE PATENTSCHRIFT

(11) **EP 1 632 535 B1**
(45) Veröffentlichungstag und Bekanntmachung des Hinweises auf die Patenterteilung: **29.12.2010**
(21) Anmeldenummer: 05016961.4
(22) Anmeldetag: 04.08.2005
(51) Int. Cl.: C09B 67/26, C09B 67/22, D21H 21/28

(54) **Flüssigformulierungen von Direktfarbstoffen**
Liquid formulations of direct dyes
Formulations liquides des colorants directs

(30) Priorität: 02.09.2004 EP 04020878
(43) Veröffentlichungstag der Anmeldung: 08.03.2006
(73) Patentinhaber: BASF SE, 67056 Ludwigshafen (DE)
(72) Erfinder: Nordmann, Gero, Dr., 69120 Heidelberg (DE); Reichelt, Helmut, Dr., 67435 Neustadt (DE); Klopp, Ingo, Dr., 67256 Weisenheim (DE); Schröder, Gunter-Rudolf, Dr., 68259 Mannheim (DE)

(56) Entgegenhaltungen:
- EP-A- 1 258 562
- EP-A- 1 548 069
- WO-A-00/73390
- WO-A-03/020808
- DE-A- 3 128 478
- DE-A- 4 233 040
- DE-A- 19 716 821
- US-A- 4 617 381
- DATABASE WPI Section Ch, Week 198910 Derwent Publications Ltd., London, GB; Class A97, AN 1989-072721 XP002312222 -& JP 01 024873 A (MITSUBISHI CHEM IND LTD) 26. Januar 1989 (1989-01-26)
- DATABASE WPI Section Ch, Week 198918 Derwent Publications Ltd., London, GB; Class A97, AN 1989-135577 XP002312223 -& JP 01 081871 A (MITSUBISHI CHEM IND LTD) 28. März 1989 (1989-03-28)
- DATABASE WPI Section Ch, Week 199617 Derwent Publications Ltd., London, GB; Class A87, AN 1996-167570 XP002312238 & JP 08 049190 A (HYMO CORP) 20. Februar 1996 (1996-02-20)

## Beschreibung

Die vorliegende Erfindung betrifft wässrige Flüssigformulierungen enthaltend
- 5-25 Gew.-%: einer Farbstoffzusammensetzung umfassend
20-100 Gew.-% Direct Yellow 11 oder eines Farbstoffs erhält- lich durch Reduktion oder thermische Be- handlung von Direct Yellow 11
0-30 Gew.-% eines blauen Direktfarbstoffes,
0-30 Gew.-% eines roten Direktfarbstoffes und
0-60 Gew.-% eines braunen Direktfarbstoffes jeweils bezogen auf die Farbstoffzusammensetzung und
- 1-25 Gew.-%: Poly-N-vinylformamid und/oder eines Polymers, das erhalten wird durch Polymerisation einer Mischung aus einem oder mehreren ethylenisch ungesättigten Monomere und > 50 Gew.- % N-Vinylformamid bezogen auf die Gesamtmonomere,
bezogen auf das Gesamtgewicht der wässrigen Flüssigformulierung, sowie ihre Verwendung zum Färben von Cellulosematerial insbesondere Papier.

Für die Herstellung von Verpackungsmaterial werden Braunfarbstoffe benötigt, die einen hellbraunen, nur in einem engen Bereich variierenden Farbton aufweisen. Das Braun kann dabei ein synthesebedingtes Farbstoffgemisch sein, wie im Fall von Basic Brown 1, oder eine Farbstoffmischung aus einem Gelbfarbstoff, einem Blaufarbstoff und gegebenenfalls einem Rotfarbstoff. Farbstoffmischungen haben den großen Vorteil, dass eine Nuancierung des Farbtons leichter möglich ist. Problematisch ist es jedoch, lagerstabile Flüssigformulierungen dieser Farbstoffmischungen zu erhalten.

Schlechte Lagerstabilität von Flüssigformulierungen resultiert aus der oftmals begrenzten Löslichkeit der Farbstoffe in Wasser, da diese wiederum meist mit einer erwünschten hohen Affinität zur Faser einhergeht. Während dies für die in der Papiermaschine vorliegenden Farbstoffkonzentrationen aufgrund der niedrigen Konzentration keine Auswirkung hat, kann es für die im Handel immer beliebteren Flüssigformulierungen große Auswirkungen haben. Oftmals ergeben sich Probleme mit der Lagerstabilität der Flüssigformulierung, wenn die Fässer längere Zeit gelagert werden müssen. Dabei können sowohl Kälte wie auch Hitze zu Niederschlägen führen, die nicht nur kritisch für die Dosierpumpen sein können sondern auch zur Stippenbildung oder ungleichmäßigen Färbungen des Papiers führen können. Noch problematischer wird die Lagerstabilität bei Farbstoffmischungen, da hier mehrere Farbstoffe gleichzeitig in Lösung gehalten werden müssen.

Um generell die Löslichkeit einer Farbstoffformulierung zu verbessern, werden in der Regel löslichkeitsverbessernde Zusätze gewählt, die oftmals auch als Gegenion der Farbstoffsäuren dienen. Als löslichkeitsverbessernde Zusätze sind die verschiedensten Stoffklassen bekannt wie Alkohole, Mono-, Oligo- oder Polyalkylenglykole, Lactame, Amine und Amide.

Die EP-A-1 258 562 beschreibt Braunmischungen mit Direct Yellow 11 sowie mit Direct Orange 15, die jedoch keinerlei löslichkeitsverbessernde Zusätze enthalten.

Die ältere europäische Anmeldung 3 029 578 lehrt lagerstabile Flüssigformulierungen von verrötetem Direct Yellow 11 durch Zusatz einer Mischung aus Harnstoff und Ethanolamin.

Niedermolekulares Polyvinylformamid sowie dessen Hydrolyseprodukt Polyvinylamin sind Fixiermittel bei der Papierherstellung. Die kationische Ladung des Polyvinylamins bewirkt eine Bindung zwischen anionischen Farbstoffen und den schwach anionisch geladenen Papierfasern und fixiert so die im Färbeprozess dem wässrigen Papierstoff zugesetzten Farbstoffe auf der Papierfaser. So lehrt die EP-A-663 031 den Zusatz von Polyvinylformamid unterschiedlichen Hydrolysierungsgrades als Fixiermittel beim Färben in der Masse während des Papierherstellungsprozesses.

Die JP 01 024 873 beschreibt Aufzeichnungsflüssigkeiten enthaltend Poly-N-vinylformamid. Diese Aufzeichnungsflüssigkeiten enthalten jedoch keine Farbstoffzusammensetzung mit Direct Yellow 11.

Die Druckschriften JP-A- 1 024 873 sowie JP-A- 1 081 871 beschreiben Aufzeichnungsflüssigkeiten, die Poly-N-Vinylformamid enthalten und lagerstabil sind.

Die WO-A- 00/73390 beschreibt lagerstabile, wäßrige Farbstoffformulierungen enthaltend u.a. auch Direktgelb 11.

Für die Herstellung von Verpackungsmaterial war es nun das Ziel, dem jeweiligen Papierhersteller speziell für seinen Rohzellstoff fertig abgemischte Braunmischungen anzubieten. Das hat für ihn den Vorteil, dass er zum einen nicht selber mischen muss und zum anderen nur noch die eine Braunfarbstoffmischung lagern muss. Damit wurde die Lagerstabilität der braunen wässrigen Flüssigformulierungen zur Aufgabe der vorliegenden Erfindung. Da die braune Flüssigformulierung ausgehend von einer gelb/orangen Flüssigformulierung hergestellt wird, die mit Rot und Blau abgetönt wird, muss auch die gelb/orange Flüssigformulierung eine hohe Lagerstabilität aufweisen. Darüber hinaus müssen die der gelb/orangen Flüssigformulierung zugesetzten Hilfsmittel auch in der braunen Flüssigformulierung stabilisierend wirken, da ihre Abtrennung nicht praktikabel wäre.

Der vorliegenden Erfindung lag somit eine Flüssigformulierung als Aufgabe zugrunde, die für sowohl den gelb/orangen Farbstoff wie auch für die braune Farbstoffzusammensetzung eine verbesserte Lagerstabilität sowohl bei kalter wie auch bei warmer Lagerung aufweist.

Demgemäss wurden die obengenannten Flüssigformulierungen gefunden.

Erfindungsgemäß enthält die wässrige Flüssigformulierung Poly-N-vinylformamid und/oder ein Polymer, das erhalten wird durch Polymerisation einer Mischung aus einem oder mehreren ethylenisch ungesättigten Monomere und > 50 Gew.-% N-Vinylformamid bezogen auf die Gesamtmonomere.

Poly-N-vinylformamid ist ein Polymer mit einem mittleren Molekulargewicht im Bereich von ≤340 000. Das mittlere Molekulargewicht wurde mittels stat. Lichtstreuung bestimmt. Bevorzugt wird ein Poly-N-vinylformamid dessen mittleres Molekulargewicht im Bereich von 300 -100 000 insbesondere von 300 bis 10 000 liegt. Poly-N-vinylformamid ist allgemein bekannt. Man erhält es durch Polymerisation von Vinylformamid. Seine Herstellung wird beispielsweise in der DE-A-312 84 78 beschrieben.

Die Polymerisation von N-Vinylformamid erfolgt nach bekannten Verfahren unter Verwendung radikalischer Polymerisationsinitiatoren, wie Peroxiden, Hydroperoxiden, Redoxkatalysatoren oder von in Radikale zerfallenden Azoverbindungen. Die Polymerisation wird in einem Lösungs- bzw. Verdünnungsmittel in einem Temperaturbereich von 30 bis 140°C durchgeführt. In Abhängigkeit von den Polymerisationsbedingungen erhält man Polymerisate eines unterschiedlichen Molekulargewichts, das mit Hilfe der K-Werte nach Fikentscher charakterisiert werden kann. Der K-Wert kann in einem weiten Bereich zwischen 10 und 200 schwanken. Polymerisate mit einem hohen K-Wert, z.B. von oberhalb 80, werden vorzugsweise durch Polymerisieren des N-Vinylformamids in Wasser hergestellt. Polymerisate eines niedrigeren K-Wertes, z.B. unterhalb von 80, erhält man, wenn man die Polymerisation in Gegenwart von bekannten Polymerisationsreglem oder in einem Lösungsmittel durchführt, das die Polymerisation regelt, z.B. Alkohole, wie Methanol, Ethanol, n- und Isopropanol, sowie Aceton und Methylethylketon. Andere Polymerisationsregler sind beispielsweise Hydroxylammoniumsalze, chlorierte Kohlenwasserstoffe und Thioverbindungen, wie Dodecylmercaptan. Polymerisate eines niedrigeren K-Wertes können z.B. durch Verwendung von darin löslichen Polymerisationsinitiatoren auf Basis von Azoverbindungen erhalten werden. Eine besonders geeignete Azoverbindung für die Polymerisation in Isopropanol ist beispielsweise 2,2'-Azo-bis-(isobutyronitril). Für die Herstellung hochmolekularer Polymerisate des N-vinylformamids verwendet man wasserlösliche Azoverbindungen, z.B. 2,2'-Azobis(2-amidinopropan)-hydrochlorid und 4,4'-Azobis-(4'-cyan-pentansäure), wobei man die Reaktion in wässriger Lösung durchführt. Außer einer Lösungspolymerisation in Wasser, einem in Wasser löslichen Lösungsmittel, Mischungen aus Wasser und einem in Wasser löslichen Lösungsmittel kann die Polymerisation nach Art einer Wasser-in-Öl-Emulsionspolymerisation erfolgen. Auch die umgekehrte Suspensionspolymerisation zur Herstellung feinteiliger Polymerisate ist möglich. Der pH-Wert bei der Polymerisation - sofern in einem wässrigen Medium gearbeitet wird - liegt in dem Bereich von 4 bis 9. Bei der Lösungspolymerisation werden vorwiegend Polymerisatlösungen herstellt, deren Feststoffgehalt 5 bis 50 Gew.-% beträgt.

Bedingt durch seine Herstellung sowie durch die wässrige Flüssigformulierung lässt sich die Hydrolyse der Amidgruppe zur Amingruppe nicht vollständig vermeiden. Unter Polyvinylformamid ist daher im Rahmen dieser Anmeldung ein Polymer zu verstehen, das bis zu 20 Mol-% hydrolysierte Gruppen enthält. Der Hydrolysegrad lässt sich einfach mittels Polyelektrolyttitration bestimmen. Bevorzugt ist ein Hydrolysegrad ≤15 Mol-%, insbesondere ≤10 Mol-%, ganz besonders bevorzugt ≤5 Mol-%.

Als ethylenisch ungesättigte Comonomere sind beispielsweise zu nennen Vinylformiat, Vinylacetat, Vinylpropionat, Acrylnitril, N-Vinylcaprolactam, N-Vinylharnstoff, N-Vinylpyrrolidon, C₁- bis C₆-Alkylvinylether, N-Vinylacetamid, Methyacrylat und Methylmethacrylat.

Bevorzugt werden wässrige Flüssigformulierungen enthaltend 5-25 Gew.-% der Farbstoffzusammensetzung und 1-25 Gew.%, insbesondere 1-15 Gew.-% Poly-N-vinylformamid bezogen auf das Gesamtgewicht der Flüssigformulierung.

Die Gew.-% Angaben der Farbstoffe beziehen sich jeweils auf den Farbstoff berechnet in Form seiner freien Säure. Die Farbstoffe liegen in der Flüssigformulierung in Form ihrer Salze vor. Die durch Umsetzung von Direct Yellow 11 erhaltenen Farbstoffe haben bevorzugt als Gegenionen Alkaliionen wie Natrium-, Kalium- und insbesondere Lithiumionen.

Sowohl Direct Yellow 11 als auch Direct Orange 15 sind Stilbenfarbstoffe. Direct Yellow 11 wird als Produkt der Selbstkondensation von 5-Nitro-o-toluolsulfonsäure in wässrig alkalischem Medium erhalten. Seine Umsetzung mit Reduktionsmitteln wie Glucose oder Natriumsulfid führt zu Direct Orange 15 (C.I. 40002 bzw. 40003). Diese Farbstoffe sind Mischungen von Farbstoffen unbestimmter Konstitution. Unter Direct Orange 15 versteht der Fachmann Mischungen, deren Bunttonwinkel nach CIELAB auf gebleichtem Zellstoff sich im Farbraum im Bereich von 45 bis <55 bewegt. Reduziert man Direct Yellow 11 unterstöchiometrisch in bezug auf die Nitrotoluolsulfonsäure, so erhält man Farbstoffgemische mit einem gelborangen Farbton. Man bezeichnet diese bathochrome Verschiebung des Farbtons auch als "Verrötung" von Direct Yellow 11. Eine solche Verrötung des Farbtons lässt sich auch durch thermische Behandlung von Direct Yellow 11 bei einem pH-Wert im Bereich von 12 - 13 erreichen.

Bevorzugt werden gelborange Farbstoffe, im folgenden auch als teilverrötete Farbstoffe bezeichnet, die erhältlich sind durch Reduktion oder thermische Behandlung von Direct Yellow 11 und deren Bunttonwinkel auf gebleichtem Zellstoff im Farbraum im Bereich von 55 bis 75, insbesondere im Bereich von 55 bis 65, liegt.

Unter blauen Direktfarbstoffen sind direktziehende Farbstoffe mit einem Absorptionsmaximum im Wellenlängenbereich von 560 bis 650 nm zu verstehen. Unter roten Direktfarbstoffen sind direktziehende Farbstoffe mit einem Absorptionsmaximum im Wellenlängenbereich von 490 bis 540 zu verstehen.

Bevorzugt werden blaue Direktfarbstoffe wie Direct Violet 9 (C.I. 27855), Direct Violet 35, Direct Violet 51 (C.I. 27905), Direct Blue 86 (C.I. 74180), Direct Blue 199 (C.I. 74190), Direct Blue 218 (C.I. 24401), Direct Blue 267, Direct Blue 273, Direct Blue 279, Direct Blue 281, Direct Blue 71, 273 als Kupferkomplex, und 290. Insbesonders werden Direct Blue 15, 279, 281, 290 und die Farbstoffe der Formeln I, II und III bevorzugt.

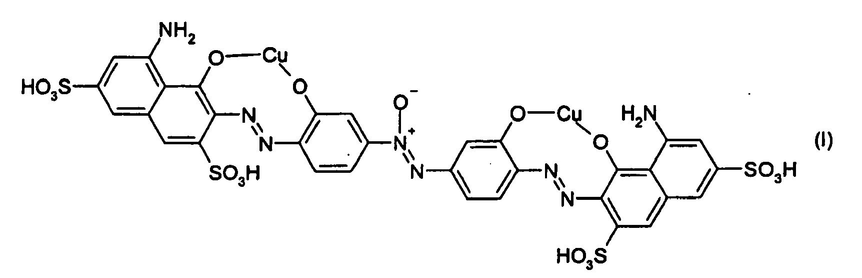

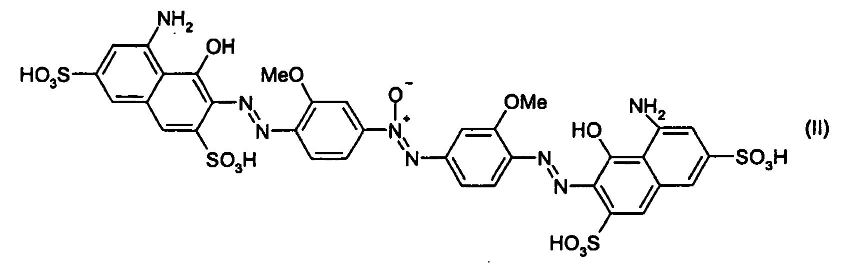

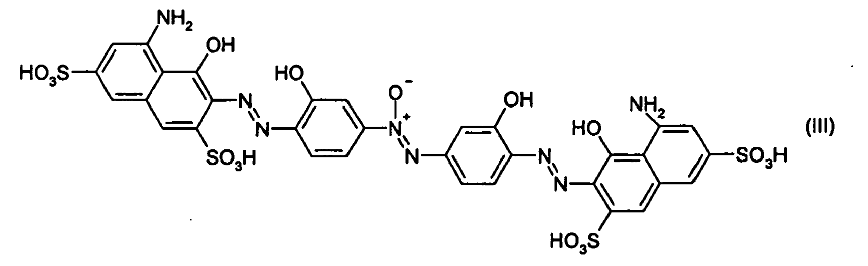

Ebenfalls bevorzugt werden rote Direktfarbstoffe wie Direct Red 80, Direct Red 81 (C.I. 28160), Direct Red 239, Direct Red 252-255 und Direct Red 262.

Weiterhin kann auch ein brauner Direktfarbstoff, bevorzugt Direct Brown 44, zum Abtönen eingesetzt werden. In der Regel verwendet man in diesem Fall keinen Rotfarbstoff. Je nach gewünschtem Braunfarbton ist es möglich, zusätzlich mit einem Orangefarbstoff abzutönen. Beispiele für Orangefarbstoffe sind Direct Orange 15, Direct Orange 34 (C.I. 40215) und Direct Orange 102 (C.I. 29156). In der Regel wird man dies jedoch nicht machen, da mit den teilverröteten Farbstoffen und gegebenenfalls dem roten oder dem braunen Direktfarbstoff sich alle Nuancen erzielen lassen.

Bevorzugt werden wässrige Flüssigformulierungen, deren Farbstoffzusammensetzung
- 40-95 Gew.-%: eines Farbstoffs erhältlich durch Reduktion oder thermische Behand- lung von Direct Yellow 11, bevorzugt teilverrötetes Direct Yellow 11,
- 3-25 Gew.-%: eines blauen Direktfarbstoffes
- 0-25 Gew.-%: eines roten Direktfarbstoffes und
- 0-40 Gew.-%: eines braunen Direktfarbstoffes, bevorzugt Direct Brown 44, umfasst.

Besonders bevorzugt werden wässrige Flüssigformulierungen, deren Farbstoffzusammensetzung
- 70-92 Gew.-%: eines Farbstoffs erhältlich durch Reduktion oder thermische Behand- lung von Direct Yellow 11, bevorzugt teilverrötetes Direct Yellow 11
- 5-15 Gew.-%: eines Farbstoffes ausgewählt unter Direct Blue 15, 273, 279, 280, 290 und den Farbstoffen der Formel I, II und III,
- 3-15 Gew.-%: eines Farbstoffes ausgewählt unter Direct Red 81, 239 ,254 und
- 0-30 Gew.-%: Direct Brown 44 umfasst.

Weiterhin werden wässrige Flüssigformulierungen bevorzugt, deren Farbstoffzusammensetzung
- 40-80 Gew.-%: eines Farbstoffs erhältlich durch Reduktion oder thermische Behand- lung von Direct Yellow 11, bevorzugt teilverrötetes Direct Yellow 11,
- 5-25 Gew.-%: eines Farbstoffes ausgewählt unter Direct Blue 15, 273, 279, 281, 290 und den Farbstoffen der Formel I, II und III,
- 15-35 Gew.-%: eines braunen Direktfarbstoffes, bevorzugt Direct Brown 44, umfasst.

Ebenfalls vorteilhaft sind Flüssigformulierungen, deren Farbstoffzusammensetzung
- 25-45 Gew.-%: Direct Yellow 11
- 5-20 Gew.-%: eines Farbstoffes ausgewählt unter Direct Blue 15, 273, 279, 281, 290 und den Farbstoffen der Formel I, II und III
- 40-60 Gew.-%: eines braunen Direktfarbstoffes bevorzugt Direct Brown 44 enthält.

Ferner sind Flüssigformulierungen vorteilhaft, deren Farbstoffzusammensetzung
- 50-90 Gew.-%: Direct Yellow 11
- 5-25 Gew.-%: eines Farbstoffes ausgewählt unter Direct Red 81, 239, 254 und
- 5-25 Gew.-%: eines Farbstoffes ausgewählt unter Direct Blue 15, 273, 279, 281, 290 und den Farbstoffen der Formel I, II und III enthält.

Man erreicht eine Verrötung von Direct Yellow 11 beispielsweise durch seine Umsetzung mit Formaldehyd oder durch basische Kondensation von 5-Nitrotoluolsulfonsäure in Gegenwart von Formaldehyd. Ferner erzielt man eine Verrötung durch Zugabe von Glucose oder Natriumsulfid. Weitere Verrötungsreaktionen sind dem Colour Index und der darin zitierten Literatur zu den Farbstoffen C.I. 40001, 40002, 40003 zu entnehmen.

Bevorzugt werden Farbstoffe, die durch Umsetzung von Direct Yellow 11 mit einem organischen Reduktionsmittel erhalten werden. Organische Reduktionsmittel sind beispielsweise Hydroxyaldehyde wie Pentosen, Hexosen und Heptosen, bevorzugt Glucose.

Die bevorzugten teilverröteten Farbstoffe sind erhältlich durch unterstöchiometrische Reduktion bezogen auf die Nitrotoluolsulfonsäure.

Besonders bevorzugte teilverrötete Farbstoffe werden erhalten durch Umsetzung von Direct Yellow 11 mit 0,05 bis 0,3 Mol, bevorzugt 0,1 bis 0,25 Mol Hydroxyaldehyd, insbesondere Glucose, pro Mol eingesetzte Nitrotoluolsulfonsäure. Bei Erreichen des gewünschten Farbtons kann die Verrötungsreaktion durch Neutralstellen und Abkühlen gestoppt werden.

Die Herstellung von Direct Yellow 11 ist allgemein bekannt. Direct Yellow 11 wird durch Erwärmen einer alkalischen wässrigen Lösung von Nitrotoluolsulfonsäure erhalten. Durch die Umsetzung von Nitrotoluolsulfonsäure mit einem Alkalihydroxid, wie Natrium- oder bevorzugt Lithiumhydroxid, bildet sich zuerst das Salz der Nitrotoluolsulfonsäure, welches im Basischen beim Erwärmen auf 40 - 80°C zum Azostilbenfarbstoff kondensiert.

Bevorzugt setzt man der Mischung vor der Kondensation noch ein wasserlösliches Alkanolamin, in einer Menge von 0,1 bis 0,5 Mol Alkanolamin pro Mol Nitrotoluolsulfonsäure zu. Alkanolamine sind beispielsweise Ethanolamin, Isopropanolamin oder bevorzugt Diethanolamin. Vermutlich wirkt ein solcher Zusatz lösungsvermittelnd auf Reaktionszwischenstufen.

Nach erfolgter Kondensation und Abkühlen wird das alkalische Gemisch annähernd neutral gestellt, beispielsweise mit Essigsäure. Unter Neutralstellen sind im Rahmen dieser Anmeldung pH-Werte im Bereich von 7 bis 9 zu verstehen.

Nach einer bevorzugten Variante setzt man zur Herstellung des teilverröteten oder verröteten Farbstoffs ein Direct Yellow 11 ein, das erhältlich ist durch Umsetzen von 1 Mol Nitrotoluolsulfonsäure mit 1,4 bis 1,8 Mol Lithiumhydroxid, Zugabe von 0,1 bis 0,5 Mol Alkanolamin, Erwärmen des Reaktionsgemisches auf 40 bis 80°C und Neutralstellen.

Nach einer besonders bevorzugten Variante werden die Herstellung von Direct Yellow 11 und der Verrötungsschritt ohne Zwischenisolierung von Direct Yellow 11 durchgeführt. Der teilverrötete Farbstoff ist dann direkt erhältlich durch Umsetzung von 1 Mol Nitrotoluolsulfonsäure mit 1,4 bis 1,8 Mol Lithiumhydroxid, Zugabe von 0,1 bis 0,5 Mol Alkanolamin, Erwärmen des Reaktionsgemisches auf 40 bis 80°C, Umsetzen mit 0,05 bis 0,3 Mol Glucose bezogen auf ein Mol eingesetzte Nitrotoluolsulfonsäure und Neutralstellen.

Besonders bevorzugt ist eine Arbeitsweise, bei der man während der Kupplung und Reduktion die Temperatur kontinuierlich, in linearer oder nichtlinearer Weise, oder periodisch erhöht. Die Temperaturdifferenz zwischen dem Beginn der Kupplung und dem Ende der Reduktion kann bis zu 40 K betragen. Im Allgemeinen beträgt diese Differenz 15 bis 25 K.

Bevorzugt werden wässrige Flüssigformulierungen, die Polyvinylformamid in Kombination mit Harnstoff enthalten. Bevorzugt werden wässrige Flüssigformulierungen umfassend 5-25 Gew.-% Farbstoffzusammensetzung, 1-25 Gew.-% bevorzugt 1-15 Gew.-% Poly-N-vinylformamid und 1-30 Gew.-% Harnstoff, bezogen auf das Gesamtgewicht der wässrigen Flüssigformulierung, wobei die Gesamtmenge aus Poly-N-vinylformamid und Harnstoff 40 Gew.-% nicht übersteigt.

Dabei werden Mischungen bevorzugt, in denen die Summe aus den beiden Komponenten 10-25 Gew.% beträgt. Das bedeutet, bei geringem Polyvinylformamidgehalt im Bereich von 1 - 5 Gew.-% werden hohe Harnstoffgehalte im Bereich von >9-24 Gew.% bevorzugt. Werden nur 1-9 Gew.-% Harnstoff zugesetzt, so beträgt der bevorzugte Anteil Polyvinylformamid >5 -16 Gew.-%.

Bevorzugt werden wässrige Flüssigformulierungen umfassend 10-25 Gew.-% Farbstoffzusammensetzung, 1-15 Gew.-% Poly-N-vinylformamid und 1-30 Gew.-% Harnstoff. Besonders bevorzugt werden wässrige Flüssigformulierungen umfassend 15-20 Gew.-% Farbstoffzusammensetzung speziell die bevorzugten Farbstoffzusammensetzungen, 1-10 Gew.-% Poly-N-vinylformamid und 1-20 Gew.% Harnstoff.

Synthesebedingt enthalten die bevorzugten Flüssigformulierungen noch Diethanolamin. Daher werden Flüssigformulierungen umfassend 5-25 Gew.-% Farbstoffzusammensetzung, 1-15 Gew.-%, bevorzugt 1-10 Gew.% Poly-N-vinylformamid, 0,5-5 Gew.%, bevorzugt 1,5-3 Gew.-% eines Alkanolamins und 1-30 Gew.-%, bevorzugt 1-25 Gew.%, Harnstoff bevorzugt.

Die Farbstoffe können als feuchter Presskuchen oder auch in getrockneter Form eingesetzt werden. In diesem Fall stellt man eine Lösung her, indem man das Poly-N-vinylformamid und den Harnstoff zusetzt. Bevorzugt setzt man direkt das Reaktionsgemisch der Verrötungsreaktion von Direct Yellow 11 ohne zusätzlichen Isolierungsschritte ein. Bevorzugt setzt man zuerst den Harnstoff der erhaltenen Reaktionsmischung der Verrötungsreaktion von Direct Yellow 11 zu. Anschließend werden dann das Poly-N-vinylformamid und gegebenenfalls die weiteren Farbstoffe zugesetzt.

Weitere Zusätze in der Flüssigformulierung können prinzipiell sein C₁-C₄-Alkanole, z.B. Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Ketone oder Ketoalkohole, wie Aceton, Methylethylketon oder 2-Methyl-2-hydroxypentan-4-on, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2-oder 1,4-Butylenglykol, Hexan-1,6-diol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie Ethylenglykolmonomethyl- oder -monoethylether, Diethylenglykolmonomethyl- oder - monoethylether, Diethylenglykolmonobutylether (Butyldiglykol) oder Triethylenglykolmonomethyl- oder-monoethylether, C₁-C₄-Alkylester von mehrwertigen Alkoholen, γ-Butyrolacton oder Dimethylsulfoxid. Geeignete solubilisierende Zusätze sind ferner Lactame, wie ε-Caprolactam, Pyrrolidin-2-on oder N-Methylpyrrolidin-2-on, cyclische Harnstoffe, wie 1,3-Dimethylimidazolidin-2-on oder 1,3-Dimethylhexahydropyrimid-2-on sowie Polyacrylsäuren, Polyacrylsäurederivate, Polyvinylacetate, Polyvinylalkohole, Polyvinylpyrrolidone, Polysiloxane oder Copolymere der jeweiligen Monomere. Desgleichen können Oligomere des Ethylenoxids oder Propylenoxids oder Derivate dieser Oligomere zur Anwendung kommen.

Diese Zusätze können der Flüssigformulierung zugefügt werden, zeigen jedoch keinen nennenswerten Effekt. Ihr Anteil wird daher in der Regel 10 Gew.-%, bezogen auf das Gesamtgewicht der Flüssigformulierung, nicht überschreiten und beträgt häufig nicht mehr als 5 Gew.%. Nach einer bevorzugten Ausführungsform enthalten die erfindungsgemäßen Flüssigformulierungen keine (d.h. <1 Gew.%) derartigen Zusätze. Nach einer anderen bevorzugten Ausführungsform enthalten Flüssigformulierungen mit Direct Brown 44 zusätzlich bis zu 5 Gew.-% Polyethylenglykol als Zusatz.

Die erhaltenen Lösungen weisen hervorragende Lagerstabilität auf. Sie ergeben gute Papierfärbung insbesondere in der Masse.

Die nachfolgenden Beispiele sollen die Erfindung näher erläutern.

### a) Herstellung von verrötetem Direct Yellow 11

Es wurden 1,54 l Wasser vorgelegt und anschließend 1,10 kg *p*-Nitrotoluolsulfonsäure (83 gew.-%ig, 4,21 Mol) eingetragen. Es wurden insgesamt 300 g festes Lithiumhydroxid (56 gew.-%ig, 7 Mol) portionsweise zugesetzt. Anschließend gab man 110 g Diethanolamin zu und rührte 15 h bei 55 °C. Es folgte die Zugabe von einem Liter Wasser. Man rührte für 10 min, setzte 125 g Glucosemonohydrat zu und erwärmte für 2 h auf eine Temperatur von 65 °C. Anschließend wurde mit 50 g Eisessig ein pH-Wert von 9,0 eingestellt. Das Produkt wurde als braun-rote gelartige Substanz erhalten. Es wurden 4,19 kg Produkt erhalten mit einem Farbstoffgehalt von 26,2 %.

### b) Herstellung von Direct Yellow 11

Es wurden 1,54 l Wasser vorgelegt und anschließend 1,10 kg *p*-Nitrotoluolsulfonsäure (83 gew.-%ig, 4,21 Mol) eingetragen. Es wurden insgesamt 270 g festes Lithiumhydroxid (56 gew.%ig, 7 Mol) portionsweise zugesetzt. Anschließend gab man 83 g Diethanolamin zu und rührte 15 h bei 55 °C. Es folgte die Zugabe von 1,7 Liter Wasser. Man erwärmte für 2 h auf eine Temperatur von 65 °C. Anschließend wurde mit 70 g Eisessig ein pH-Wert von 9,0 eingestellt. Das Produkt wurde als braun-rote gelartige Substanz erhalten. Es wurden 4,75 kg Produkt erhalten mit einem Farbstoffgehalt von 25,0 %.

### c) Test auf Lagerstabilität

Die verschlossenen Proben wurden jeweils 8 Wochen bei 4°C und 50°C parallel gelagert und anschließend optisch nach folgendem Schlüssel bewertet:
1 = Probe läuft klar ab, keine Rückstände; 1-2 = Probe läuft klar ab, nur sehr wenig Rückst. sichtbar; 2 = Probe läuft nicht klar ab, bzw. zeigt merklichen Bodensatz oder Wandbelag; 2-3 = deutlicher Bodensatz, starker Wandbelag; 3 = viel Bodensatz, starker Wandbelag oder Probe wird fest oder geliert.

### d) Herstellung der Flüssigformulierung

### Beispiel 1

25,7 g des nach a) erhaltenen verröteten Direktgelb 11, 4,8 g Poly-N-vinylformamid mit einem mittleren Molekulargewicht von 1500, 1,0 g Direct Rot 81 in Form einer konzentrierten wässrigen Lösung des Triethanolammoniumsalzes, 1,0 g Direct Blue 281 in Form einer konzentrierten wässrigen Lösung des gemischten Natrium/Lithiumsalzes sowie 17,9 g Wasser wurden zusammengegeben und 10 min intensiv gerührt. Anschließend wurde die Probe in ein 50 ml Schraubdeckelglas gefüllt und in dieser Form bei der entsprechenden Temperatur für 8 Wochen gelagert. Diese Probe wurde nach 8 Wochen sowohl bei 4°C mit 1-2 und bei 50°C mit 1-2 bewertet.

Analog zu Beispiel 1 wurden Flüssigformulierungen mit der Tabelle 1 zu entnehmenden Zusammensetzungen hergestellt. Tabelle 2 gibt die gewählten Farbstoffzusammensetzungen wieder. Als Gelbfarbstoff wurde in den Beispielen 1-9 und den Vergleichsbeispielen V1 und V2 das nach a) hergestellte verrötete Direct Yellow 11 (Farbstoffgehalt 26,2 Gew.-%) eingesetzt und in den Beispielen 10, 11 und V3 das nach b) hergestellte nicht verrötete Direkt Yellow 11 (Farbstoffgehalt 25,0 % eingesetzt.

**Tabelle 1**

| Bsp. | Harnstoff | | Polyvinylformamid^{*} | | H₂O | Farbstoffzus. | | Stabilität n. 8 Wochen | |
|---|---|---|---|---|---|---|---|---|---|
| | [g] | [%] | [g] | [%] | [g] | [g] | [%] | 4°C | 50°C |
| 1 | 0,0 | 0 | 4,8 | 8 | 17,9 | 8,8 | 14 | 1-2 | 1-2 |
| 2 | 0,0 | 0 | 4,6 | 5 | 17,0 | 18,3 | 18 | 1-2 | 1-2 |
| 3 | 0,0 | 0 | 25,0 | 10 | 92,5 | 34,7 | 14 | 1 | 1-2 |
| 4 | 4,6 | 5 | 4,6 | 5 | 12,4 | 18,3 | 18 | 1-2 | 1-2 |
| 5 | 25,0 | 10 | 25,0 | 10 | 67,5 | 34,7 | 14 | 1-2 | 1-2 |
| 6 | 4,2 | 14 | 0,2 | 1 | 5,9 | 4,9 | 16 | 1 | 1-2 |
| 7 | 4,2 | 14 | 0,4 | 1 | 5,7 | 4,9 | 16 | 1-2 | 1 |
| 8 | 9,2 | 9 | 0,9 | 1 | 11,5 | 18,3 | 18 | 1-2 | 1-2 |
| 9 | 50,0 | 20 | 5,0 | 2 | 62,5 | 34,7 | 14 | 1 | 1-2 |
| 10 | 9,2 | 9 | 0,9 | 1 | 11,0 | 18,1 | 18 | 1 (6W) | 2 (6W) |
| 11 | 9,2 | 9 | 0,5 | 1 | 11,5 | 18,1 | 18 | 1-2 (6W) | 1-2 (6W) |
| V1 | 21,2 | 21 | 0,0 | 0 | 15,0 | 16,7 | 17 | 1-2^{#} | 2^{#} |
| V2 | 22,5 | 22 | 0,0 | 0 | 15,8 | 16,2 | 16 | 1-2 | 2-3 |
| V3 | 11,2 | 11 | 0,0 | 0 | 7,8 | 18,6 | 19 | 3 (4W) | 3 (4W) |

| | | | | | | | | | |
|---|---|---|---|---|---|---|---|---|---|
| ^{#} Belag * Es wurde ein Polyvinylformamid mit einem mittleren Molekulargewicht von 1500 eingesetzt. | | | | | | | | | |

**Tabelle 2**

| Bsp, | Gelb-Farbstoff | | | Rot/Braun-Farbstoff ** | | | Blau-Farbstoff *** | | | Summe Farbs. |
|---|---|---|---|---|---|---|---|---|---|---|
| | [g]¹⁾ | [g]^{2).} | [%]* | Typ | [g] | [%]* | Typ | [g] | [%]* | [g] |
| 1 | 25,7 | 6,7 | 77 | D.R. 81 | 1,0 | 12 | D.B.281 | 1,0 | 12 | 8,8 |
| 2 | 24,3 | 6,4 | 35 | D.Bn. 44 | 9,2 | 50 | D.B. 279 | 2,8 | 15 | 18,3 |
| 3 | 132,5 | 34,7 | 100 | - | 0,0 | 0 | - | 0,0 | 0 | 34,7 |
| 4 | 24,3 | 6,4 | 35 | D.Bn.44 | 9,2 | 50 | D.B.279 | 2,8 | 15 | 18,3 |
| 5 | 132,5 | 34,7 | 100 | - | 0,0 | 0 | - | 0,0 | 0 | 34,7 |
| 6 | 10,7 | 2,8 | 57 | DBn.44 | 1,3 | 27 | D.B.279 | 0,8 | 15 | 4,9 |
| 7 | 10,7 | 2,8 | 57 | D.Bn.44 | 1,3 | 27 | D.B.279 | 0,8 | 15 | 4,9 |
| 8 | 24,3 | 6,4 | 35 | D.Bn.44 | 9,2 | 50 | D.B.279 | 2,8 | 15 | 18,3 |
| 9 | 132,5 | 34,7 | 100 | - | 0,0 | 0 | - | 0,0 | 0 | 34,7 |
| 10 | 24,7 | 6,2 | 34 | D.Bn.44 | 9,2 | 51 | D.B.279 | 2,8 | 15 | 18,4 |
| 11 | 24,7 | 6,2 | 34 | D.Bn. 44 | 9,2 | 51 | D.B. 279 | 2,8 | 15 | 18,4 |
| V1 | 51,2 | 13,4 | 80 | D.R. 239 | 0,8 | 5 | D.B.279 | 2,4 | 14 | 16,7 |
| V2 | 54,1 | 14,2 | 88 | D.R.81 | 0,2 | 1 | D.B.279 | 1,8 | 11 | 16,2 |
| V3 | 26,8 | 6,7 | 36 | D.Bn.44 | 9,2 | 49 | D.B.279 | 2,8 | 15 | 19,0 |

| | | | | | | | | | | |
|---|---|---|---|---|---|---|---|---|---|---|
| ¹⁾ Farbstoffeinwaage des Produktes der Gelbsynthese nach a) bzw. b) ²⁾ umgerechnet auf den Farbstoffanteil in Gramm * umgerechnet auf den Farbstoffanteil in Prozent ** angegeben sind die Menge Farbsäure. D.R. 239 wird als konzentrierte, wässrige Lösung des gemischten Natrium/Ethanolammoniumsalzes zugegeben, D.R. 81 als konzentrierte wässrige Lösung des Triethanolammoniumsalzes, D.Bn. 44 als konzentrierte wässrige Lösung des gemischten Natrium/Ammoniumsalzes *** angegeben sind die Menge Farbsäure, D.B. 279 wird als konzentrierte wässrige Lösung des Triethanolammoniumsalzes, D.B 281 als konzentrierte wässrige Lösung des gemischten Natrium/Lithiumsalzes zugegeben. | | | | | | | | | | |

## Patentansprüche

1. Wässrige Flüssigformulierung enthaltend
5-25 Gew.-% einer Farbstoffzusammensetzung umfassend
20-100 Gew.% Direct Yellow 11 oder eines Farbstoffs erhält- lich durch Reduktion oder thermische Be- handlung von Direct Yellow 11
0-30 Gew.% eines blauen Direktfarbstoffes,
0-30 Gew.-% eines roten Direktfarbstoffes und
0-60 Gew.-% eines braunen Direktfarbstoffes
jeweils bezogen auf die Farbstoffzusammensetzung und
1-25 Gew.-% Poly-N-vinylformamid und/oder eines Polymers, das erhalten wird durch Polymerisation einer Mischung aus einem oder mehreren ethylenisch ungesättigten Monomere und > 50 Gew.- % N-Vinylformamid bezogen auf die Gesamtmonomere,
bezogen auf das Gesamtgewicht der wässrigen Flüssigformulierung.

2. Wässrige Flüssigformulierung nach Anspruch 1 enthaltend
5-25 Gew.-% einer Farbstoffzusammensetzung und
1-25 Gew.% Poly-N-vinylformamid
bezogen auf das Gesamtgewicht der wässrigen Flüssigformulierung.

3. Wässrige Flüssigformulierung nach einem der Ansprüche 1 bis 2, deren Farbstoffzusammensetzung
40-95 Gew.-% eines Farbstoffs erhältlich durch Reduktion oder thermische Behandlung von Direct Yellow 11,
3-25 Gew.-% eines blauen Direktfarbstoffes
0-25 Gew.-% eines roten Direktfarbstoffes und
0-40 Gew.-% eines braunen Direktfarbstoffes, bevorzugt Direct Brown 44, umfasst.

4. Wässrige Flüssigformulierung nach einem der Ansprüche 1 bis 2, deren Farbstoffzusammensetzung
25-45 Gew.-% Direct Yellow 11
5-20 Gew.-% eines Farbstoffes ausgewählt unter Direct Blue 15, 273, 279, 281, 290 und den Farbstoffen der Formel I, II und III
40-60 Gew.-% eines braunen Direktfarbstoffes enthält.

5. Wässrige Flüssigformulierung nach einem der Ansprüche 1 bis 2, deren Farbstoffzusammensetzung
50-90 Gew.-% Direct Yellow 11
5-25 Gew.-% eines Farbstoffes ausgewählt unter Direct Red 81, 239, 254 und
5-25 Gew.-% eines Farbstoffes ausgewählt unter Direct Blue 15, 273, 279, 281, 290 und den Farbstoffen der Formel I, II und III enthält.

6. Wässrige Flüssigformulierung nach einem der Ansprüche 1 bis 3, deren Farbstoffzusammensetzung einen Farbstoff umfasst, der erhältlich ist durch Umsetzung von Direct Yellow 11 mit einem organischen Reduktionsmittel.

7. Wässrige Flüssigformulierung nach einem der Ansprüche 1 bis 6 umfassend
5-25 Gew.-% Farbstoffzusammensetzung
1-25 Gew.-% Poly-N-vinylformamid und
1-30 Gew.-% Harnstoff
bezogen auf das Gesamtgewicht der wässrigen Flüssigformulierung, wobei die Gesamtmenge aus Poly-N-vinylformamid und Harnstoff 40 Gew.-% nicht übersteigt.

8. Wässrige Flüssigformulierung nach einem der Ansprüche 1 bis 7 umfassend
5-25 Gew.-% Farbstoffzusammensetzung
1-10 Gew.-% Poly-N-vinylformamid
0,5-5 Gew.-% Alkanolamin und
1-25 Gew.-% Harnstoff.

9. Verwendung der wässrigen Flüssigformulierung gemäß den Ansprüchen 1 bis 8 zum Färben von Papier und Karton.

## Claims

1. An aqueous liquid formulation comprising
5-25% by weight of a dye composition comprising
20-100% by weight of Direct Yellow 11 or of a dye obtainable by reduction or thermal treatment of Direct Yellow 11
0-30% by weight of a blue direct dye,
0-30% by weight of a red direct dye, and
0-60% by weight of a brown direct dye
all based on the dye composition, and
1-25% by weight of poly-N-vinylformamide and/or of a polymer obtained by polymerization of a mixture of one or more ethylenically unsaturated monomers and > 50% by weight of N-vinylformamide based on total monomers,
based on the total weight of the aqueous liquid formulation.

2. The aqueous liquid formulation according to claim 1 that comprises
5-25% by weight of a dye composition and
1-25% by weight of poly-N-vinylformamide
based on the total weight of the aqueous liquid formulation.

3. The aqueous liquid formulation according to either of claims 1 and 2 whose dye composition comprises
40-95% by weight of a dye obtainable by reduction or thermal treatment of Direct Yellow 11,
3-25% by weight of a blue direct dye,
0-25% by weight of a red direct dye, and
0-40% by weight of a brown direct dye, preferably Direct Brown 44.

4. The aqueous liquid formulation according to either of claims 1 and 2 whose dye composition comprises
25-45% by weight of Direct Yellow 11
5-20% by weight of a dye selected from Direct Blue 15, 273, 279, 281, 290 and the dyes of the formula I, II and III
40-60% by weight of a brown direct dye.

5. The aqueous liquid formulation according to either of claims 1 and 2 whose dye composition comprises
50-90% by weight of Direct Yellow 11
5-25% by weight of a dye selected from Direct Red 81, 239, 254 and
5-25% by weight of a dye selected from Direct Blue 15, 273, 279, 281, 290 and the dyes of the formula I, II and III.

6. The aqueous liquid formulation according to any one of claims 1 to 3 whose dye composition comprises a dye obtainable by reaction of Direct Yellow 11 with an organic reducing agent.

7. The aqueous liquid formulation according to any one of claims 1 to 6 that comprises
5-25% by weight of dye composition
1-25% by weight of poly-N-vinylformamide, and
1-30% by weight of urea
based on the total weight of the aqueous liquid formulation, the total amount of poly-N-vinylformamide and urea not exceeding 40% by weight.

8. The aqueous liquid formulation according to any one of claims 1 to 7 that comprises
5-25% by weight of dye composition
1-10% by weight of poly-N-vinylformamide
0.5-5% by weight of alkanolamine and
1-25% by weight of urea.

9. The use of the aqueous liquid formulation according to claims 1 to 8 for dyeing paper and board.

## Revendications

1. Composition liquide aqueuse comprenant
5-25 % en poids d'une composition de colorants comprenant
20-100 % en poids de Direct Yellow 11 ou d'un colorant pouvant être obtenu par réduction ou traitement thermique de Direct Yellow 11
0-30 % en poids d'un colorant direct bleu,
0-30 % en poids d'un colorant direct rouge et
0-60 % en poids d'un colorant direct marron
chaque fois par rapport à la composition de colorants et
1-25 % en poids de poly-N-vinylformamide et/ou d'un polymère qui est obtenu par polymérisation d'un mélange d'un ou plusieurs monomères à insaturation éthylénique et de > 50 % en poids de N-vinylformamide, par rapport à l'ensemble des monomères,
par rapport au poids total de la composition liquide aqueuse.

2. Composition liquide aqueuse selon la revendication 1, contenant
5-25 % en poids d'une composition de colorants et
1-25 % en poids de poly-N-vinylformamide
par rapport au poids total de la composition liquide aqueuse.

3. Composition liquide aqueuse selon l'une quelconque des revendications 1 à 2, dont la composition de colorants comprend
40-95 % en poids d'un colorant pouvant être obtenu par réduction ou traitement thermique de Direct Yellow 11
3-25 % en poids d'un colorant direct bleu,
0-25 % en poids d'un colorant direct rouge et
0-40 % en poids d'un colorant direct marron, de préférence de Direct Brown 44.

4. Composition liquide aqueuse selon l'une quelconque des revendications 1 à 2, dont la composition de colorants contient
25-45 % en poids de Direct Yellow 11
5-20 % en poids d'un colorant choisi parmi Direct Blue 15, 273, 279, 281, 290 et les colorants de formules I, II et III
40-60 % en poids d'un colorant direct marron.

5. Composition liquide aqueuse selon l'une quelconque des revendications 1 à 2, dont la composition de colorants contient
50-90 % en poids de Direct Yellow 11
5-25 % en poids d'un colorant choisi parmi Direct Red 81, 239, 254 et
5-25 % en poids d'un colorant choisi parmi Direct Blue 15, 273, 279, 281, 290 et les colorants de formules I, II et III.

6. Composition liquide aqueuse selon l'une quelconque des revendications 1 à 3, dont la composition de colorants comprend un colorant qui peut être obtenu par mise en réaction de Direct Yellow 11 avec un réducteur organique.

7. Composition liquide aqueuse selon l'une quelconque des revendications 1 à 6, comprenant
5-25 % en poids de composition de colorants
1-25 % en poids de poly-N-vinylformamide et
1-30 % en poids d'urée
par rapport au poids total de la composition liquide aqueuse, la quantité totale de poly-N-vinylformamide et d'urée n'excédant pas 40 % en poids.

8. Composition liquide aqueuse selon l'une quelconque des revendications 1 à 7, comprenant
5-25 % en poids de composition de colorants
1-10 % en poids de poly-N-vinylformamide
0,5-5 % en poids d'alcanolamine et
1-25 % en poids d'urée

9. Utilisation de la composition liquide aqueuse selon les revendications 1 à 8, pour la coloration du papier et du carton.
